# FASCICULE DE BREVET EUROPEEN

(11) **EP 3 126 294 B1**
(45) Date de publication et mention de la délivrance du brevet: **31.01.2018**
(21) Numéro de dépôt: 15705991.6
(22) Date de dépôt: 19.02.2015
(51) Int. Cl.: C01G 43/01, C01G 43/00, C01B 15/047

(54) **PROCÉDÉ D'ACTIVATION DE L'U3O8 EN VUE DE SA CONVERSION EN UO4 HYDRATÉ**
VERFAHREN ZUR AKTIVIERUNG VON U3O8 IM HINBLICK AUF DIE UMWANDLUNG IN HYDRATISIERTES UO4
METHOD FOR ACTIVATING U3O8 WITH A VIEW TO CONVERTING SAME INTO HYDRATED UO4

(30) Priorité: 19.02.2014 FR 1451330
(43) Date de publication de la demande: 08.02.2017
(73) Titulaire: AREVA NC, 92400 Courbevoie (FR)
(72) Inventeur: ARAB, Mehdi, F-30200 Bagnols sur Ceze (FR); MOREL, Bertrand, F-26130 Saint-Paul Trois Chateaux (FR); RIVENET, Murielle, F-59780 Baiseux (FR)
(74) Mandataire: Brevalex
(86) Numéro de dépôt international: PCT/EP2015/053520
(87) Numéro de publication internationale: WO 2015/124682

(56) Documents cités:
- EP-A1- 0 092 475
- FR-A1- 2 969 659

## Description

### DOMAINE TECHNIQUE

L'invention concerne un procédé d'activation ou réactivation de l'U₃O₈ en vue de la conversion de cet oxyde d'uranium en peroxyde d'uranium UO₄ hydraté.

Le domaine technique de l'invention peut être défini, de manière générale, comme celui de la conversion des concentrés uranifères miniers, se présentant notamment sous la forme d'oxyde d'uranium U₃O₈, en peroxyde d'uranium hydraté, puis en UF₄, et finalement en UF₆.

### ÉTAT DE LA TECHNIQUE ANTÉRIEURE

Le traitement des minerais d'uranium permet d'extraire l'uranium des minerais, de le purifier et de le combiner de façon à obtenir un produit appelé concentré, ou uranate ou encore « Yellow Cake » riche en uranium, par exemple comprenant plus de 70% en poids d'uranium.

Les minerais d'uranium sont tout d'abord concassés, puis broyés, et ils sont ensuite soumis à une opération de mise en solution de l'uranium à l'aide d'une base ou d'un acide, comme par exemple du carbonate de sodium ou de l'acide sulfurique, appelée attaque ou lixiviation.

Après purification et concentration des solutions provenant de la lixiviation du minerai, l'uranium est récupéré sous la forme de liqueurs, solutions, uranifères, uraniées, généralement acides, en milieu sulfates par exemple.

Ces solutions peuvent aussi être en milieu chlorure, ammoniacal, nitrate ou carbonate selon l'étape préalable de purification-concentration.

Le concentré d'uranium ou « yellow cake », est obtenu à partir de ces solutions liqueurs, uranifères par précipitation à l'aide de réactifs de précipitation tels que la soude, la magnésie, l'ammoniac, l'uranyl tricarbonate d'ammonium, et le peroxyde d'hydrogène, filtration, séchage, et calcination. L'étape de calcination est réalisée à haute température afin d'éliminer un maximum de sulfates par décomposition thermique. Cette étape de calcination à haute température conduit à des concentrés d'uranium de faible surface spécifique.

Selon le réactif de précipitation utilisé, le concentré d'uranium ou « yellow cake » sera ainsi respectivement à base d'uranate de sodium, d'uranate de magnésium, de diuranate d'ammonium, d'uranyl tricarbonate d'ammonium, ou de peroxyde d'uranium.

A l'heure actuelle, le combustible des réacteurs nucléaires à eau est généralement constitué par de l'oxyde d'uranium UO₂ faiblement enrichi en isotope ²³⁵U, généralement à raison de 3% à 5%.

Cet oxyde d'uranium UO₂ enrichi est préparé en réalisant tout d'abord l'enrichissement de l'hexafluorure d'uranium gazeux par un procédé tel que la diffusion gazeuse ou l'ultracentrifugation gazeuse.

La conversion chimique des concentrés d'uranium tels que le « yellow cake » issus du traitement des minerais d'uranium et dont on a décrit la préparation plus haut a donc essentiellement pour but de transformer les oxydes d'uranium contenus dans ces concentrés en UF₄ puis en UF₆.

Les concentrés uranifères tels que le « yellow cake » dont on a décrit la préparation plus haut, mais aussi d'autres concentrés uranifères contenant du trioxyde d'uranium ou de l'octaoxyde d'uranium uranifères ne sont pas aptes à une conversion directe notamment en UF₆.

En effet, d'une part ils contiennent trop d'impuretés pour l'étape ultérieure de séparation isotopique (également dénommée enrichissement) par rapport aux normes ASTM sur l'enrichissement (la présence de certains composés peut être rédhibitoire pour le procédé de fluoration), et d'autre part leur faible surface spécifique conduit à des cinétiques de conversion directe très faibles.

Les concentrés uranifères sont réduits en UO₂ qui est ensuite hydrofluoré en UF₄ et enfin fluoré en UF₆ impur.

Dans le cadre du procédé de conversion dit par « voie sèche », la purification est principalement effectuée à la fin du procédé, et l'UF₆ liquide est distillé sous pression dans des colonnes en série.

Cependant la plupart des concentrés uranifères et notamment les concentrés uranifères issus du traitement des minerais possèdent une réactivité insuffisante pour l'étape de réduction/hydrofluoration conduisant à l'UF₄.

Il est donc nécessaire de réaliser une étape supplémentaire de prétraitement des concentrés uranifères pour les purifier et les activer avant l'étape de réduction/hydrofluoration, et afin d'améliorer la cinétique et le taux de conversion de cette étape.

Cette étape de prétraitement peut être réalisée par divers procédés chimiques (par action d'un agent comme, par exemple, par une mise en contact des concentrés uranifères avec de l'eau et de l'acide acide sulfurique), thermiques (réduction, oxydation), ou physiques (broyage) qui tous permettent d'augmenter la réactivité des oxydes d'uranium lors de la réduction/hydrofluoration.

Ces procédés peuvent être effectués soit avant la réduction en jouant sur les précurseurs d'oxydes ou sur leur mode de synthèse comme cela est décrit dans le FR-A-1 557 353, soit en parallèle à la réduction des oxydes en UO₂, soit en modifiant les paramètres d'hydrofluoration.

L'étape de prétraitement peut également consister à activer et purifier les oxydes en effectuant leur conversion en peroxyde d'uranium hydraté qui est ensuite calciné pour donner de l'UO₃ qui est réduit en UO₂. L'UO₂ est ensuite transformé en UF₄ lors de l'étape d'hydrofluoration.

Ainsi, le document FR-A1-2 969 659 décrit un procédé de conversion de l'UO₃ ou de l'U₃O₈ en UO₄ hydraté, qui met en oeuvre du peroxyde d'hydrogène.

Plus précisément, ce procédé comprend les étapes successives suivantes :
a) préparation d'une suspension aqueuse d'une poudre de UO₃ et/ou d'une poudre de U₃O₈;
b) addition de peroxyde d'hydrogène H₂O₂ à la suspension aqueuse d'une poudre de UO₃ et/ou de U₃O₈, conversion de l'UO₃ et/ou du U₃O₈ en UO₄ hydraté et précipitation, cristallisation du UO₄ hydraté dans la suspension ;
c) récupération du précipité, des cristaux d'UO₄ hydraté ;
dans lequel l'addition du H₂O₂ à la suspension aqueuse est effectuée de façon à ce que la suspension contienne un excès stoechiométrique de H₂O₂ par rapport à la stoechiométrie de la réaction à partir d'UO₃ ou de la réaction à partir d'U₃O₈, et le pH de la suspension est maintenu dans les étapes a), et b) à une valeur comprise entre 2 et 3, par exemple en ajoutant un acide, tel que l'acide oxalique ou l'acide sulfurique, à la suspension.

Ce procédé ne comporte pas d'étape préalable de dissolution de l'U₃O₈ ou de l'UO₃ avant d'effectuer leur conversion par addition de peroxyde d'hydrogène, et cette conversion est réalisée en suspension et non en solution.

Le peroxyde d'uranium hydraté préparé par ce procédé présente une teneur en impuretés suffisamment faibles pour que ce peroxyde d'uranium hydraté puisse être converti directement en UF₄ puis en UF₆. Ce peroxyde d'uranium hydraté présente, en outre, une surface spécifique élevée et une réactivité élevée pour une conversion rapide en UF₄.

Cependant, il a été constaté que certains concentrés miniers uranifères, notamment les concentrés uranifères miniers se présentant sous la forme d'oxydes d'uranium U₃O₈, ne peuvent pas être convertis en UO₄ hydraté, en mettant en oeuvre le procédé du document FR-A1-2 969 659, ou alors avec des temps de réaction très élevés et en utilisant des excès de réactifs importants, et en particulier d'acide sulfurique qui vont générer des quantités importantes de déchets.

Afin d'améliorer les cinétiques de réaction, plusieurs solutions pourraient être envisagées pour activer ces concentrés uranifères et accroître leur réactivité.

Une première solution serait d'augmenter la température du milieu, et une deuxième solution serait d'augmenter la surface spécifique des concentrés miniers en les broyant.

La première solution ne peut être utilisée que sur une plage étroite de températures, à savoir, de 20°C à 40°C. En effet, au-delà de 40°C, la réaction de dégradation de l'eau oxygénée, qui est le réactif nécessaire à la conversion en UO₄, devient prépondérante, et il faut alors ajouter de forts excès de ce réactif.

En outre, sur cette plage de températures faibles, l'amélioration de la cinétique est faible.

La seconde solution envisagée, à savoir augmenter la surface spécifique des concentrés miniers en les broyant, nécessite une étape supplémentaire dans le procédé de conversion. De plus, cette étape nécessite la manipulation de poudres fines qui occasionnent des risques de contamination accrus.

Il existe donc, au regard de ce qui précède, un besoin pour un procédé permettant l'activation ou la réactivation de l'U₃O₈ en vue de la conversion de cet oxyde d'uranium, en UO₄ hydraté par l'eau oxygéné, notamment par le procédé décrit dans le document FR-A1-2 969 659, et qui ne présente pas les inconvénients des techniques d'activation par augmentation de la température ou par broyage préalable mentionnés plus haut.

Il existe notamment un besoin pour un tel procédé d'activation qui permette que tous les concentrés miniers (y compris ceux qui ne peuvent pas être convertis en mettant en oeuvre le procédé du document FR-A1-2 969 659) puissent être convertis par l'eau oxygénée en peroxyde d'uranium hydraté, notamment par le procédé du document FR-A1-2 969 659, avec des temps de réaction réduits et sans excès importants de réactifs.

Ce procédé d'activation doit permettre de préparer des oxydes U₃O₈ activés, qui donnent, par réaction avec H₂O₂, du peroxyde d'uranium hydraté qui présente une teneur en impuretés faible, en particulier une teneur en impuretés suffisamment faible pour que ce peroxyde d'uranium hydraté puisse être converti directement en UF₄ puis en UF₆.

L'UO₄ hydraté doit satisfaire totalement ou en grande partie à la norme ASTM C-787 relative à la pureté de l'UO₄ hydraté pour la conversion en UF₆, et présenter une surface spécifique élevée et une grande réactivité en vue de sa conversion en UF₄.

Le but de la présente invention est de fournir un procédé permettant l'activation ou la réactivation de l'U₃O₈ en vue de la conversion de ces oxydes d'uranium en UO₄ hydraté par l'eau oxygéné, qui réponde à l'ensemble des besoins et exigences, énumérés plus haut.

### EXPOSÉ DE L'INVENTION

Ce but, et d'autres encore, sont atteints, conformément à l'invention, par un procédé d'activation de U₃O₈ en vue de la conversion de cet oxyde d'uranium en UO₄ hydraté par réaction avec du peroxyde d'hydrogène H₂O₂, dans lequel on réalise les étapes successives suivantes :
a) on prépare une suspension aqueuse contenant une poudre de U₃O₈ et du peroxyde d'hydrogène ;
b) on met en contact la suspension aqueuse contenant une poudre de U₃O₈ et du peroxyde d'hydrogène avec de l'ozone, moyennant quoi on obtient une suspension aqueuse d'une poudre de U₃O₈ activé ;
c) éventuellement, on sépare la poudre de U₃O₈ activé à partir de la suspension aqueuse.

Avantageusement, lors de l'étape b) on introduit et on fait buller un courant gazeux contenant de l'ozone dans la suspension aqueuse contenant une poudre de U₃O₈ et du peroxyde d'hydrogène.

Avantageusement, on fait buller l'ozone dans la suspension aqueuse pendant une durée de 1 à 10 heures, par exemple de 8 heures.

Avantageusement, lors de l'étape a), on ajoute de la poudre de U₃O₈ à un mélange d'eau et d'une solution aqueuse de peroxyde d'hydrogène H₂O₂.

Avantageusement, le courant gazeux contenant de l'ozone est un courant d'air contenant de l'ozone, ou un courant d'oxygène contenant de l'ozone, de préférence à une concentration en ozone de 1 à 500 g/m³, de préférence encore de 1 à 225 g/m³, mieux de 75 à 225 g/m³.

Avantageusement, la solution aqueuse de peroxyde d'hydrogène a une concentration de 30% à 70% en poids.

Avantageusement, la suspension aqueuse préparée dans l'étape a) a une concentration en uranium de 10 à 500 g/L, de préférence de 200 à 300 g/L, par exemple de 250 g/L.

Avantageusement, lors de l'étape b), le rapport molaire entre l'ozone et l'U₃O₈ dans la suspension aqueuse est compris entre 1 et 5.

Avantageusement, lors de l'étape b), la quantité de peroxyde d'hydrogène dans la suspension aqueuse est au moins égale à la quantité d'ozone introduite dans la suspension aqueuse (c'est à dire que le rapport molaire entre la quantité de peroxyde d'hydrogène introduite dans la suspension aqueuse et la quantité d'ozone introduite dans la suspension aqueuse est d'au moins =1).

Avantageusement, ladite mise en contact peut être réalisée sous agitation.

Avantageusement, l'oxyde U₃O₈ se présente sous la forme d'un concentré uranifère appelé « Yellow Cake », ou l'oxyde U₃O₈ provient du séchage, puis de la calcination d'un concentré d'uranium à base par exemple d'UO₄ hydraté, de diuranate d'ammonium, ou de tricarbonate d'uranium, obtenu par précipitation dans un réacteur, notamment dans un réacteur à lit fluidisé, à partir d'une solution uranifère.

Le procédé d'activation selon l'invention n'a jamais été décrit ou suggéré dans l'art antérieur.

En particulier, la caractéristique fondamentale du procédé d'activation selon l'invention, à savoir la caractéristique selon laquelle une poudre de U₃O₈ est mise en contact à la fois avec une solution aqueuse de peroxyde d'hydrogène et de l'ozone, pour ainsi obtenir une poudre de U₃O₈ activé, n'est ni décrite ni suggérée dans l'art antérieur.

Le procédé selon l'invention est un procédé d'« activation ». En effet, le procédé selon l'invention, grâce à l'action conjointe du peroxyde d'hydrogène et de l'ozone permet, de manière surprenante, d'accroître la réactivité de cet oxyde d'uranium U₃O₈ lors de sa réaction ultérieure avec le peroxyde d'hydrogène pour préparer du peroxyde d'uranium UO₄ hydraté.

Sans vouloir être lié par aucune théorie, il semblerait que les molécules d'ozone réagissent avec les molécules de peroxyde d'hydrogène pour former des radicaux OH^{•} qui réagissent avec l'oxyde d'uranium et provoquent son activation.

Cette augmentation de la réactivité de l'oxyde d'uranium U₃O₈ est en partie due à une augmentation de la surface spécifique des poudres de cet oxyde, généralement d'au moins un facteur 2, de préférence d'un facteur de 2 à 4, de préférence encore d'un facteur de 2 à 10. Cette augmentation de la surface spécifique de la poudre d'oxyde U₃O₈ activé préparée par le procédé selon l'invention par rapport aux poudres d'oxyde avant leur traitement par le procédé de l'invention est montrée dans l'exemple 2, et sur la Figure 3.

Grâce à cette augmentation de la réactivité, les cinétiques de conversion des oxydes d'uranium lors de leur réaction ultérieure avec le peroxyde d'hydrogène pour préparer du peroxyde d'uranium UO₄ hydraté (par exemple par le procédé décrit dans le document FR-A1-2 969 659) sont grandement améliorées. En effet, une grande partie des oxydes d'uranium présents sous forme d'oxyde d'uranium U₃O₈, ne sont pas convertis en peroxyde hydraté, si l'on n'ajoute pas d'acide sulfurique ou même si l'on ajoute une quantité modérée d'acide sulfurique, et cela même si on laisse réagir l'oxyde d'uranium U₃O₈, avec de l'eau oxygénée pendant 24 h. Ainsi, jusqu'à 90% de l'U₃O₈ n'est pas converti lorsque l'on met en oeuvre le procédé du document FR-A1-2 969 659 avec une poudre de U₃O₈ qui n'a pas été activée alors que la conversion atteint presque 100% lorsque l'on met en oeuvre le procédé du document FR-A1-2 969 659 avec une poudre de U₃O₈ activée préparée par le procédé selon l'invention.

Le procédé selon l'invention assure une activation des oxydes d'uranium sans présenter les inconvénients des techniques d'activation par augmentation de la température ou par broyage préalable mentionnées plus haut.

Grâce à l'activation des oxydes d'uranium obtenue par le procédé selon l'invention, tous les concentrés miniers sans exception (y compris ceux qui ne peuvent pas être convertis en mettant en oeuvre le procédé du document FR-A1-2 969 659) peuvent être convertis par l'eau oxygénée en peroxyde d'uranium hydraté avec des temps de réaction réduits, par exemple inférieurs ou égaux à 8 heures voire inférieurs ou égaux à 3 heures, et sans excès importants de réactifs (par exemple avec un rapport molaire H₂O₂/U inférieur à 5, de préférence inférieur à 3 ou encore par exemple avec un rapport molaire S/U inférieur à 0,125 voire nul).

Ainsi, grâce à l'activation des oxydes d'uranium réalisée par le procédé selon l'invention, la conversion de ces oxydes d'uranium en peroxyde d'uranium hydraté par le procédé du document FR-A1-2 969 659 peut être effectuée avec une quantité limitée (à savoir par exemple un rapport molaire S/U de l'ordre de 0,02) d'acide tel que l'acide sulfurique, voire même sans acide. La quantité de déchets générés par le procédé de conversion est donc grandement limitée.

De même, grâce à l'activation des oxydes d'uranium réalisée par le procédé selon l'invention, la conversion de ces oxydes d'uranium en peroxyde d'uranium hydraté par le procédé du document FR-A1-2 969 659 peut être effectuée avec une quantité limitée d'ions complexants, tels que des ions sulfates, voire même sans ions complexants tels que des ions sulfates. Là-encore, la quantité de déchets générés par le procédé de conversion s'en trouve grandement limitée.

Finalement, le procédé selon l'invention répond à l'ensemble des besoins et exigences énumérés plus haut.

On sait que l'utilisation de l'ozone nécessite généralement de mettre en place un système de destruction de l'ozone excédentaire.

Dans le procédé selon l'invention, la présence de l'eau oxygénée permet de détruire les molécules d'ozone pour former des radicaux OH•.

L'invention concerne, en outre, un procédé de conversion d'U₃O₈ en UO₄ hydraté de formule UO₄, nH₂O où n est 2 ou 4, comprenant au moins une étape dans laquelle on ajoute du peroxyde d'hydrogène H₂O₂ à la suspension aqueuse d'une poudre de U₃O₈ activé obtenue à l'issue de l'étape b) du procédé d'activation décrit plus haut, ou à une suspension aqueuse préparée en mettant en suspension dans de l'eau la poudre de U₃O₈ activé obtenue à l'issue de l'étape c) du procédé d'activation décrit plus haut.

Avantageusement, dans une forme de réalisation préférée, le procédé de conversion est le procédé décrit dans le document FR-A1-2 969 659, toutefois légèrement modifié pour ce qui concerne la valeur à laquelle le pH de la suspension est maintenu dans les étapes a1) et b1), et il comprend les étapes successives suivantes :
a1) addition de peroxyde d'hydrogène H₂O₂ à la suspension aqueuse d'une poudre de U₃O₈ activé obtenue à l'issue de l'étape b) du procédé d'activation selon l'invention, ou à une suspension aqueuse préparée en mettant en suspension dans de l'eau la poudre de U₃O₈ activé obtenue à l'issue de l'étape c) du procédé d'activation selon l'invention, conversion de l'U₃O₈ en UO₄ hydraté, et précipitation, cristallisation du UO₄ hydraté dans la suspension ;
b1) récupération du précipité, des cristaux d'UO₄ hydraté ;
c1) éventuellement, lavage du précipité, des cristaux de UO₄ hydraté récupéré(s) ;
d1) éventuellement, répétition de l'étape c1) ;
e1) éventuellement, séchage du précipité, des cristaux;
dans lequel l'addition du H₂O₂ à la suspension aqueuse est effectuée de façon à ce que la suspension contienne un excès stoechiométrique de H₂O₂ par rapport à la stoechiométrie de la réaction à partir d'U₃O₈ :

UO_{2,67} + 1,33 H₂O₂ + nH₂O→ UO₄,nH₂O+ 1,33 H₂O (1)

et le pH de la suspension est maintenu dans les étapes a1), et b1) à une valeur comprise entre 1 et 3.

Le procédé de conversion selon l'invention se distingue fondamentalement des procédés de conversion de l'art antérieur, et notamment du procédé faisant l'objet du document FR-A1-2 969 659 en ce qu'il est mis en oeuvre sur une poudre de U₃O₈ spécifique qui est une poudre activée par le procédé d'activation selon l'invention.

Le procédé de conversion selon l'invention présente toute une série d'avantages, dont la plupart ont déjà été exposés plus haut, qui sont dus de manière inhérente à la mise en oeuvre dans ce procédé d'une poudre de U₃O₈ activé par le procédé d'activation selon l'invention.

Le procédé de conversion selon l'invention ne présente pas les inconvénients des procédés de conversion de l'art antérieur et notamment du procédé faisant l'objet du document FR-A1-2 969 659 tout en présentant tous les avantages, et surmonte les problèmes du procédé de ce document.

Avantageusement, l'addition de H₂O₂ à la suspension aqueuse est effectuée de façon à ce que la suspension contienne un excès stoechiométrique de H₂O₂ par rapport à la stoechiométrie de la réaction à partir d'U₃O₈ :

UO_{2,67} + 1,33 H₂O₂+ nH₂O → UO₄,nH₂O + 1,33 H₂O (1)

et le pH de la suspension est maintenu dans les étapes a1) et b1) à une valeur comprise entre 1 et 3 (1 et 3 inclus).

Avantageusement, le pH de la suspension est ajusté lors de l'étape a1) à une valeur comprise entre 1 et 3 en ajoutant un acide à la suspension.

Avantageusement, ledit acide est choisi parmi l'acide oxalique, l'acide sulfurique et leurs mélanges.

Avantageusement, l'excès stoechiométrique de H₂O₂ est de plus de 1,33 à 10 par rapport à la stoechiométrie de la réaction (1).

Avantageusement, le peroxyde d'hydrogène est ajouté sous la forme d'une solution aqueuse à une concentration de 30% à 70% en poids.

Avantageusement, la suspension aqueuse de U₃O₈ a une concentration en uranium de 10 à 500 g/L, de préférence de 200 à 300 g/L par exemple de 250 g/L.

Avantageusement, les étapes a1) et b1) peuvent être réalisées sous agitation.

Avantageusement, comme on l'a déjà indiqué plus haut, du fait de l'utilisation d'une poudre de U₃O₈ activé, lors de l'étape a1) et/ou de l'étape b1), on n'ajoute pas d'anions complexants tels que des anions sulfates ou des anions oxalates à la suspension, ou on ajoute une faible quantité de ces anions complexant, inférieure à celle ajoutée dans le procédé du document FR-A1-2 969 659.

Avantageusement, la durée de l'étape b1) est choisie de façon à ce que la conversion de l'U₃O₈ activé en UO₄ hydraté soit totale ou substantiellement totale, par exemple supérieure à 99%, voire 99,9%.

Dans une forme de réalisation, l'étape b1) peut comprendre les étapes successives b2) et b3) suivantes :
b2) addition de peroxyde d'hydrogène H₂O₂ à la suspension aqueuse d'une poudre de U₃O₈ activé, de préférence sous agitation, puis arrêt de l'addition ;
b3) mûrissement de la suspension, de préférence sous agitation.

Avantageusement, la durée de ladite étape b2) peut être de 1 à 8 heures, de préférence inférieure à 8 heures, de préférence encore comprise entre 1 à 3 heures, et la durée de l'étape b3) peut être de 1 à 24 heures, de préférence de 1 à 3 heures.

Dans une autre forme de réalisation, l'addition de peroxyde d'hydrogène H₂O₂ est réalisée pendant toute la durée de l'étape b1), c'est-à-dire que l'étape b3) est omise.

Dans cette forme de réalisation, la durée de l'étape b1) est généralement de 1 à 8 heures, préférentiellement inférieure à 8 heures, de préférence de 1 à 5 heures.

Dans ce cas notamment, l'eau de la suspension peut être éliminée par évaporation, et le précipité, les cristaux de UO₄ hydraté, sont alors récupérés sous la forme d'un solide sec, par exemple d'une humidité inférieure à 7% en masse, généralement constitué de UO₄,2H₂O, ou bien, lors de l'étape c1), le précipité, les cristaux de UO₄ hydraté sont séparés de la suspension par une opération de séparation solide/liquide, par exemple une opération de filtration ou de centrifugation, sous la forme d'un solide humide, par exemple d'une humidité de 30% à 80% en masse, généralement constitué de UO₄, 4H₂O.

Par contre, l'évaporation ne permettra pas généralement d'éliminer les impuretés.

Avantageusement, ledit solide humide est lavé au moins une fois avec un liquide de lavage.

Avantageusement, ledit liquide de lavage est choisi parmi l'eau déminéralisée ; les solutions aqueuses acidifiées, de préférence à un pH de 1 à 3, par exemple avec de l'acide sulfurique ; les solutions contenant un agent complexant des impuretés contenues dans le solide humide.

Avantageusement, le rapport de lavage défini par le rapport de la masse du liquide de lavage sur la masse du solide humide est de 1 à 30, de préférence de 1 à 10.

Le procédé de conversion selon l'invention peut être défini comme un procédé de conversion directe sans dissolution préalable de l'U₃O₈ activé par addition de H₂O₂ à une suspension aqueuse d'une poudre de U₃O₈ activé.

Le procédé de conversion selon l'invention, qui ne comporte pas d'étape de dissolution préalable de l'uranium ne présente pas tous les inconvénients dus à cette étape de dissolution préalable. En particulier, le procédé de conversion selon l'invention évite ainsi la formation de nombreuses impuretés qui peuvent s'avérer extrêmement gênantes dans les étapes ultérieures de conversion de l'UO₄ hydraté, par exemple en UF₄.

Le procédé de conversion selon l'invention est en outre défini, dans sa forme de réalisation préférée -qui correspond sensiblement au procédé faisant l'objet du document FR-A1-2 969 659- par le fait que la suspension contient un excès stoechiométrique de H₂O₂ par rapport aux réactions (1) et (2), ce qui permet d'obtenir une conversion totale ou quasi-totale.

Le procédé de conversion selon l'invention, dans sa forme de réalisation préférée, est en outre caractérisé en ce que le pH de la suspension est maintenu dans les étapes a1) et b1) à une valeur spécifique comprise entre 1 et 3 inclus.

La sélection de cette plage de pH très réduite permet d'une part d'éviter les risques de redissolution de l'UO₄ hydraté aux pH trop acides, généralement inférieurs à 1, et d'autre part d'éviter les risques de formation de composés autres que l'UO₄ hydraté aux pH plus basiques, généralement supérieurs à 3, ainsi que la précipitation d'impuretés suivant l'uranium.

Le procédé de conversion selon l'invention, notamment dans sa forme de réalisation préférée, permet de préparer du peroxyde d'uranium ou du peroxyde d'uranium hydraté qui présente une teneur en impuretés faibles, en particulier une teneur en impuretés suffisamment faible pour que ce peroxyde d'uranium ou ce peroxyde d'uranium hydraté puisse être converti directement en UF₄ puis en UF₆.

Le procédé de conversion selon l'invention permet notamment de préparer de l'UO₄ hydraté qui satisfait totalement ou en grande partie à la norme ASTM C-787 relative à la pureté de l'UO₄ hydraté pour la conversion en UF₆.

Le procédé de conversion selon l'invention permet, en outre, de préparer un peroxyde d'uranium qui présente une réactivité élevée pour une conversion rapide en UF₄.

En effet, le procédé de conversion selon l'invention permet d'obtenir un UO₄ hydraté ayant une surface spécifique élevée, pouvant aller jusqu'à 30 m²/g.

L'invention sera maintenant mieux comprise à la lecture de la description détaillée qui suit en liaison notamment avec des modes de réalisation préférés des procédés selon l'invention. Cette description est donnée à titre illustratif et non limitatif, en référence aux dessins joints.

### BRÈVE DESCRIPTION DES DESSINS.

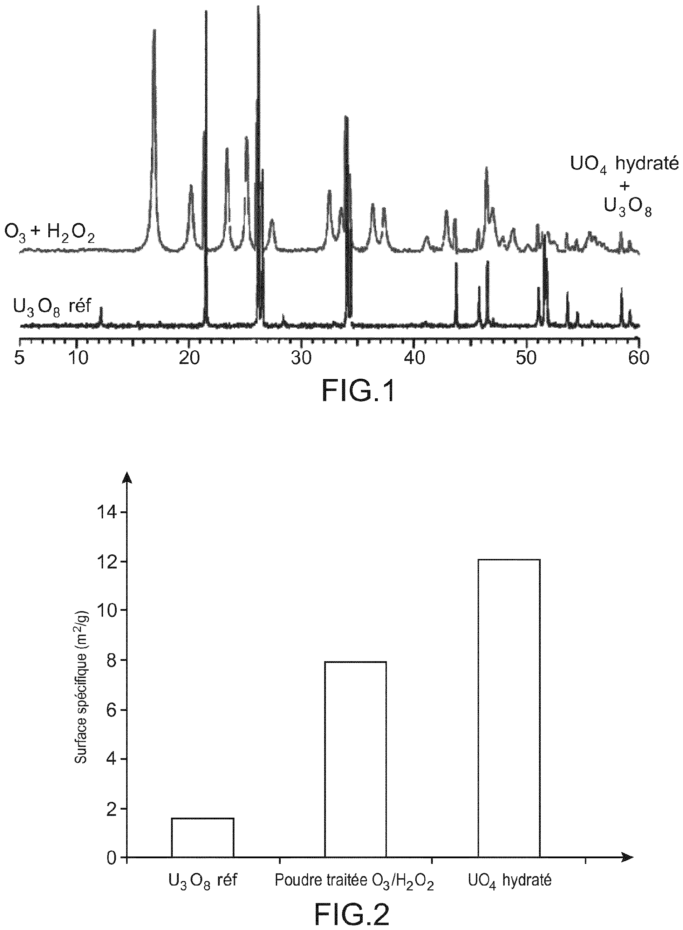

- La Figure 1 est un graphique qui montre le diffractogramme obtenu lors de l'analyse de diffraction des rayons X du solide activé obtenu dans l'exemple 2 par action, conformément au procédé d'activation de l'invention, d'un courant gazeux contenant de l'ozone sur une suspension aqueuse d'oxyde U₃O₈ contenant en outre de l'eau oxygénée.
- La Figure 2 est un graphique qui donne la surface spécifique (en m²/g) d'un oxyde U₃O₈ de référence n'ayant subi aucun traitement d'activation (à gauche), de la poudre de U₃O₈ activé obtenu dans l'exemple 2 par action, conformément au procédé d'activation de l'invention, d'un courant gazeux contenant de l'ozone sur une suspension aqueuse d'oxyde U₃O₈ contenant en outre de l'eau oxygénée (au centre), et enfin de l'UO₄ hydraté obtenu dans l'exemple 2 (à droite).

### EXPOSÉ DÉTAILLÉ DE MODES DE RÉALISATION PARTICULIERS.

Dans la première étape du procédé d'activation selon l'invention (étape a)), on prépare une suspension aqueuse contenant une poudre d'octaoxyde d'uranium U₃O₈, et du peroxyde d'hydrogène.

Cette suspension peut être préparée en ajoutant une poudre de U₃O₈ à une solution contenant du peroxyde d'hydrogène.

Cette solution peut être préparée en mélangeant de l'eau et de l'eau oxygénée -c'est-à-dire une solution aqueuse de peroxyde d'hydrogène- pour obtenir une solution aqueuse dont la concentration en peroxyde d'hydrogène est de 0,5 à 10% en poids. L'eau oxygénée a généralement une concentration en peroxyde d'hydrogène de 30% à 70% en poids.

La concentration en oxyde(s) de la suspension aqueuse est généralement de 10 à 500 gU/L, de préférence de 200 à 300 gU/L.

Le procédé selon l'invention peut être mis en oeuvre avec toutes sortes d'octaoxyde d'uranium U₃O₈, quelle que soit leur origine et la forme sous laquelle ils se présentent.

Ces oxydes peuvent, par exemple, se présenter sous la forme de concentrés appelés « Yellow Cake ».

Ces oxydes peuvent aussi provenir du séchage, puis de la calcination d'un concentré d'uranium à base par exemple d'UO₄ hydraté, de diuranate d'ammonium, ou de tricarbonate d'uranium par précipitation dans un réacteur, notamment dans un réacteur à lit fluidisé, à partir d'une solution uranifère.

Un procédé de préparation d'une poudre de U₃O₈ par séchage puis calcination d'un concentré d'uranium à base d'UO₄ hydraté, de diuranate d'ammonium ou de tricarbonate d'uranium préalablement obtenu par précipitation en lit fluidisé est décrit dans le document WO-A1-2010/051855 à la description duquel on pourra se référer.

Les poudres de U₃O₈ obtenues dans ce document présentent du fait de la préparation du concentré d'uranium dans un lit fluidisé, des propriétés particulièrement avantageuses.

Les oxydes sous la forme de concentrés appelés « Yellow Cake » ou les oxydes provenant du séchage et de la calcination d'un concentré d'uranium obtenu de préférence par précipitation en lit fluidisé se présentent généralement sous la forme de poudres et peuvent être utilisés directement dans le procédé selon l'invention, et être mis en suspension dans de l'eau.

Toutefois, il peut être avantageux de réaliser un broyage préalable des poudres d'oxyde afin d'obtenir une granulométrie particulièrement fine, par exemple de l'ordre du micromètre.

Les poudres mises en suspension contiennent généralement des impuretés et le procédé de conversion selon l'invention consécutif au procédé d'activation, a notamment pour but de réduire la teneur en ces impuretés dans le peroxyde d'uranium hydraté obtenu.

De préférence, on cherche à obtenir par le procédé de conversion selon l'invention un peroxyde d'uranium hydraté dont les teneurs en impuretés soient compatibles avec sa transformation en UF₆ et dont les teneurs en impuretés satisfont la norme ASTM C-787.

La poudre de U₃O₈ peut contenir une ou plusieurs parmi les impuretés suivantes, par exemple dans les teneurs suivantes, exprimées en ppm/U :
As : 102
Ca : 1383
Si : 2312
Zr : 316
SO₄ : 29205
Mo: 1109
Na : 20

Il est bien évident que la suspension aqueuse contenant une poudre d'octaoxyde d'uranium U₃O₈, et du peroxyde d'hydrogène peut être préparée d'autres manières, par exemple on peut commencer par préparer une suspension aqueuse contenant une poudre d'octaoxyde d'uranium U₃O₈ en ajoutant la ou les poudres à de l'eau non oxygénée sans peroxyde d'hydrogène (ou vice et versa), puis ajouter de l'eau oxygénée à cette suspension aqueuse.

Au cours de la deuxième étape du procédé de conversion selon l'invention (étape b), on met en contact la suspension aqueuse contenant une poudre de U₃O₈, et du peroxyde d'hydrogène, avec de l'ozone, moyennant quoi on obtient une suspension aqueuse d'une poudre de U₃O₈ activé.

La mise en contact de la suspension aqueuse avec de l'ozone est généralement réalisée en introduisant et en faisant buller un courant gazeux contenant de l'ozone dans la suspension aqueuse contenant une poudre de U₃O₈ et du peroxyde d'hydrogène.

Le courant gazeux contenant de l'ozone est généralement un courant d'un gaz contenant de l'oxygène, tel que de l'air ou de l'oxygène qui contient de l'ozone, généralement à une concentration de 1 à 500 g/m³.

Un tel courant d'un gaz contenant de l'ozone peut être produit dans un ozoneur ou générateur d'ozone dans lequel l'ozone est créé en soumettant un gaz contenant de l'oxygène, tel que de l'air, à une décharge à effet corona qui transforme une partie de l'oxygène du gaz en ozone.

On fait généralement buller l'ozone dans la suspension aqueuse pendant une durée de 1 à 10 heures, par exemple de 8 heures.

Généralement, lors de l'étape b) le rapport molaire entre l'ozone et le U₃O₈ dans la suspension aqueuse est compris entre 1 et 5.

Généralement, comme on l'a indiqué plus haut, lors de l'étape b), la quantité de peroxyde d'hydrogène dans la suspension aqueuse est au moins égale à la quantité d'ozone introduite dans la suspension aqueuse (rapport molaire égal ou supérieur à 1).

Les étapes a) et b) sont généralement réalisées sous agitation.

Ainsi, le réacteur utilisé pour mettre en oeuvre le procédé selon l'invention et réaliser notamment les étapes a) et b) est généralement un réacteur parfaitement agité muni généralement d'un agitateur à hélice, par exemple d'une hélice tripale.

Le réacteur peut être pourvu en outre de contre-pales ou déflecteurs.

Le volume du réacteur peut être facilement choisi par l'homme du métier en fonction du volume de suspension que l'on souhaite préparer.

Le réacteur peut, en outre, être pourvu de capteurs et de dispositifs pour mesurer les valeurs de paramètres tels que le pH et la température de la suspension.

La suspension peut être préparée en introduisant une quantité connue de poudre d'oxyde(s) dans le réacteur.

On ajoute ensuite à cette quantité connue d'oxyde, la quantité d'eau et d'eau oxygénée voulue pour obtenir une suspension ayant la concentration souhaitée.

La poudre et le mélange d'eau et d'eau oxygénée ayant été introduits dans le réacteur, on débute l'agitation pour mettre en suspension la ou les poudre(s) dans le mélange d'eau et d'eau oxygénée.

La vitesse de l'agitation est réglée pour permettre une mise en suspension efficace de la poudre. Ensuite on fait buller un courant gazeux contenant de l'ozone dans la suspension aqueuse ainsi obtenue dans les conditions détaillées plus haut.

Eventuellement, lors d'une étape c) optionnelle, on sépare la poudre de U₃O₈ activé à partir de la suspension aqueuse par tout procédé de séparation solide/liquide adéquat, par exemple par filtration.

La suspension aqueuse d'une poudre de U₃O₈ activé obtenue à l'issue de l'étape b) du procédé d'activation peut être utilisée directement dans le procédé de conversion de de U₃O₈ en UO₄ hydraté de formule UO₄, nH₂O où n est 2 ou 4, tel que le procédé du document FR-A1-2 969 659. Par exemple, cette suspension aussi appelée pulpe peut être acheminée directement depuis le réacteur où a été réalisé le procédé d'activation, à l'issue de celui-ci jusque dans le réacteur où est réalisé le procédé de conversion.

Ou bien, on peut utiliser dans ce procédé de conversion, tel que le procédé du document FR-A1-2 969 659, une suspension aqueuse préparée en mettant en suspension dans de l'eau la poudre de U₃O₈ activé obtenue à l'issue de l'étape c) de séparation du procédé d'activation selon l'invention.

Le réacteur utilisé pour mettre en oeuvre le procédé de conversion selon l'invention et réaliser notamment les étapes a1) et b1) est généralement un réacteur parfaitement agité, muni généralement d'un agitateur à hélice, par exemple d'une hélice tripale.

Le réacteur peut être pourvu en outre de contre-pales ou déflecteurs.

Le volume du réacteur peut être facilement choisi par l'homme du métier en fonction du volume de suspension que l'on souhaite préparer.

Le réacteur peut, en outre, être pourvu de capteurs et de dispositifs pour mesurer les valeurs de paramètres tels que le pH et la température de la suspension.

Comme on l'a déjà indiqué plus haut, la suspension aqueuse d'une poudre de U₃O₈ activé obtenue à l'issue de l'étape b) du procédé d'activation peut être utilisée directement dans le procédé de conversion de UO₃ et/ou de U₃O₈ en UO₄ hydraté de formule UO₄, nH₂O où n est 2 ou 4, tel que le procédé du document FR-A1-2 969 659 et alors, cette suspension aussi appelée pulpe peut être acheminée directement depuis le réacteur où a été réalisé le procédé d'activation, à l'issue de celui-ci, jusque dans le réacteur où est réalisé le procédé de conversion.

Ou bien, on peut utiliser dans ce procédé de conversion, tel que le procédé du document FR-A1-2 969 659, une suspension aqueuse préparée en mettant en suspension dans de l'eau la poudre de U₃O₈ activé obtenue à l'issue de l'étape c) de séparation du procédé d'activation selon l'invention.

La suspension est généralement préparée en introduisant une quantité connue de poudre d'oxyde U₃O₈ activé dans le réacteur.

On ajoute ensuite à cette quantité connue d'oxyde activé, la quantité d'eau déminéralisée voulue pour obtenir une suspension ayant la concentration souhaitée.

Il est bien évident que l'on peut aussi commencer par introduire l'eau déminéralisée dans le réacteur, puis ajouter la poudre d'oxyde activé à l'eau déminéralisée.

La concentration en oxyde activé de la suspension est généralement telle que définie plus haut, à savoir une concentration en uranium de 10 à 500 g/L, de préférence de 200 à 300 g/L, par exemple de 250 g/L.

Le pH de l'eau déminéralisée est ajusté à une valeur de 1 à 3, par addition d'un acide ou d'un mélange d'acides. Dans le cas où l'on utilise dans le procédé de conversion directement la suspension obtenue dans l'étape b) du procédé d'activation l'acide est ajouté à cette suspension.

Ce(s) acide(s) peut (peuvent) être tout acide minéral ou organique.

Comme on le verra plus loin, on préfère un acide dont l'anion a en outre une action complexante qui améliore la cinétique de la réaction.

Les acides préférés sont l'acide sulfurique, l'acide oxalique, et leurs mélanges.

D'autres acides sont par ailleurs utilisables pour ajuster le pH mais l'acide sulfurique présente l'avantage de ne pas introduire d'éléments gênants vis-à-vis de la pureté nucléaire de l'UF₆ car il n'existe pas de spécifications ASTM portant sur le soufre.

Par ailleurs, la vitesse de conversion en UO₄ hydraté est limitée par la formation d'un intermédiaire réactionnel (ion uranyle UO₂²⁺) mais peut être accélérée par l'utilisation d'au moins un anion complexant comme l'anion sulfate ou l'anion oxalate ou encore l'anion citrate.

On peut donc ajouter un composé fournissant cet anion complexant lors de l'étape a1) et/ou de l'étape b1) du procédé de conversion selon l'invention. Dans le cas du soufre, le rapport optimal S/U est inférieur à 0,125, par exemple de l'ordre de 0,02.

On utilisera de préférence l'acide sulfurique en tant que composé fournissant l'anion complexant pour la mise en suspension de l'oxyde d'uranium afin d'obtenir des cinétiques de conversion rapides.

La poudre et l'eau déminéralisée ayant été introduites dans le réacteur, on débute l'agitation pour mettre en suspension la poudre d'oxyde activé dans l'eau déminéralisée.

La vitesse de l'agitation est réglée pour permettre une mise en suspension efficace de la poudre ou pour maintenir en suspension la poudre, dans le cas où l'on utilise dans le procédé de conversion la suspension obtenue à l'issue de l'étape b) du procédé d'activation.

L'agitation est poursuivie pendant toute la durée de la conversion en UO₄ hydraté pour permettre une cristallisation complète de l'uranium de départ.

On peut alors commencer à ajouter du peroxyde d'hydrogène dans la suspension.

L'addition du peroxyde d'hydrogène peut se faire à l'aide de tout dispositif adéquat permettant de contrôler le débit du peroxyde d'hydrogène introduit dans le réacteur.

L'addition du peroxyde d'hydrogène est également réalisée de préférence sous agitation.

Le peroxyde d'hydrogène est généralement ajouté sous la forme d'une solution aqueuse à une concentration de 30% à 70% en poids.

La quantité totale de peroxyde d'hydrogène ajoutée est telle, conformément à l'invention, que l'excès stoechiométrique de H₂O₂ par rapport à l'uranium initial soit de plus de 1,33 à 10 par rapport à la stoechiométrie de la réaction (1) suivante :

UO_{2,67} + 1,33 H₂O₂+ nH₂O → UO₄,nH₂O + 1,33 H₂O (1)

La réaction entre l'oxyde et le peroxyde d'hydrogène est exothermique et on constate par exemple une augmentation de la température du bain d'environ 10°C.

Dans une forme de réalisation, on réalise les étapes successives b2) et b3) suivantes :
b2) addition, comme décrit plus haut, de peroxyde d'hydrogène H₂O₂ à la suspension aqueuse d'une poudre de U₃O₈, de préférence sous agitation, puis arrêt de l'addition ;
b3) mûrissement de la suspension, de préférence sous agitation.

Au cours de l'étape b2), on peut estimer qu'une certaine conversion en peroxyde d'uranium hydraté se produit, mais que cette conversion n'est pas totale.

L'étape b2) peut être qualifiée d'étape de nucléation, cristallisation, formation des cristallites de peroxyde d'uranium hydraté.

Au cours de l'étape b3), la conversion est poursuivie jusqu'à ce que la conversion de l'UO₃ et/ou de U₃O₈ en UO₄ hydraté soit totale ou substantiellement totale, par exemple supérieure à 90%, voire 99,9%.

L'étape b3) peut être qualifiée d'étape de mûrissement, croissance des cristallites obtenus lors de l'étape b2).

La durée de ladite étape b2) peut être de 1 à 8 heures, de préférence de 1 à 3 heures, et la durée de l'étape b3) peut être de 1 à 24 heures, de préférence de 1 à 3 heures.

La durée totale des étapes b2) et b3) est telle que la conversion en peroxyde d'uranium hydraté soit totale ou substantiellement totale.

Dans une autre forme de réalisation, on ne réalise pas d'étape de mûrissement à l'issue de l'étape b2) et l'étape b3) est omise.

Il est à noter que lors de la réaction de l'eau oxygénée avec les oxydes, le pH varie mais demeure globalement stable, constant, à la valeur à laquelle il avait été ajusté avant l'addition de l'eau oxygénée par addition d'acide, ce qui signifie qu'il n'est généralement pas nécessaire d'ajouter encore de l'acide lors de l'étape b) afin de contrôler le pH à la valeur voulue.

En fait, on peut estimer qu'une certaine régulation du pH est induite par l'addition d'H₂O₂ à l'U₃O₈.

A la fin de la réaction, la conversion étant totale ou substantiellement totale, le pH se stabilise généralement à une valeur entre 1 et 3.

A l'issue de l'étape b1), la conversion en peroxyde d'uranium hydraté étant totale ou substantiellement totale, on récupère le précipité, les cristaux d'UO₄ hydraté, généralement sous la forme tétrahydraté UO₄, 4H₂O ou éventuellement sous la forme dihydraté UO₄, 2H₂O.

On peut dans une variante de l'étape c1) de récupération, récupérer, recueillir, le précipité, les cristaux de UO₄ hydraté en les séparant de la suspension par une opération de séparation liquide-solide sous la forme d'un solide humide, par exemple d'une humidité de 30% à 80% en masse, aussi appelé gâteau.

Les cristaux de UO₄ hydraté récupérés sont dans cette variante généralement des cristaux de UO₄, 4H₂O.

Cette opération de séparation liquide-solide peut être une opération de filtration de la suspension.

Cette opération de filtration peut être réalisée sous vide ou par action d'une force centrifuge.

Le solide humide recueilli peut être ensuite lavé avec un liquide de lavage.

Ledit liquide de lavage peut être de l'eau déminéralisée, ou une solution aqueuse acidifiée, de préférence à un pH de 2 à 3, par exemple avec de l'acide sulfurique.

On peut aussi utiliser en tant que liquide de lavage une solution aqueuse, de préférence à un pH de 2 à 3, d'un anion complexant vis-à-vis des impuretés contenues dans le solide humide tel que ceux déjà mentionnés plus haut.

L'acide sulfurique présente l'avantage de jouer à la fois un rôle acidifiant et complexant grâce aux anions sulfates.

L'opération de lavage peut être répétée de 1 à 10 fois selon la teneur en impuretés souhaitée du peroxyde d'uranium.

Avantageusement, le rapport de lavage défini par le rapport de la masse du liquide de lavage (sur la totalité des lavages) sur la masse du solide humide est de 1 à 30, de préférence de 1 à 10 pour limiter les volumes d'eau nécessaires au lavage.

Le procédé selon l'invention peut éventuellement comprendre une étape de séchage des cristaux de UO₄ hydraté récupérés.

Cette étape de séchage est généralement réalisée à une température de 60°C à 100°C pendant une durée de 1 à 24 heures.

Au cours de cette étape, le peroxyde d'uranium hydraté récupéré est transformé en UO₄, 2H₂O s'il s'agit de UO₄, 4H₂O.

Le peroxyde d'uranium hydraté obtenu présente une réactivité élevée pour une conversion rapide en UF₄.

Par exemple, on obtient une conversion d'au moins 90% de l'uranium en UF₄ en 800 secondes.

En effet, le procédé de conversion selon l'invention permet d'obtenir un UO₄ hydraté ayant une surface spécifique élevée, pouvant aller jusqu'à 30 m²/g.

Les teneurs en impuretés du peroxyde final sont inférieures à celles de peroxydes obtenus par les procédés de l'art antérieur et sont pour la plupart conformes à la norme ASTM C-787.

L'invention va maintenant être décrite en référence aux exemples suivants donnés à titre illustratif et non limitatif.

### EXEMPLES :

Dans les exemples qui suivent, on décrit la conversion d'U₃O₈ non activé en UO₄ hydraté par réaction avec du peroxyde d'hydrogène seul (Exemple 1, comparatif) ; l'activation d'U₃O₈, conformément à l'invention, à l'aide d'un mélange d'ozone et d'eau oxygénée ; et enfin la conversion de l'U₃O₈ activé obtenu dans l'exemple 2 en mettant en oeuvre le procédé de conversion de l'invention (Exemple 3).

### Exemple 1 (Exemple comparatif) :

0,5 g d'U₃O₈ sont placés en suspension dans un flacon contenant 10 mL d'eau. Du peroxyde d'hydrogène est introduit dans la suspension d'U₃O₈ de manière à atteindre une concentration molaire de 1 mol/L en H₂O₂. L'agitation est maintenue pendant 24 h.

En fin d'essai, la suspension est filtrée et le solide obtenu est analysé. Le solide obtenu est de couleur noire.

Le solide est analysé par diffraction des rayons X et le diffractogramme obtenu montre la transformation de l'U₃O₈ en UO₄ hydraté.

Dans ces conditions, la conversion de l'U₃O₈ en UO₄ hydraté est faible de l'ordre de 10%.

### Exemple 2 :

0,5 mmol d'U₃O₈ sont placés en suspension dans un flacon contenant 10mL d'eau et 0,15mL d'eau oxygénée à 30%. Un courant gazeux contenant de l'ozone est introduit dans la suspension d'U₃O₈ pendant 8 heures. L'ozone est généré par un ozoneur OZ 1000-L. La concentration moyenne en ozone mesurée est de 4,5 g/m³.

En fin d'essai, la suspension est filtrée.

Le solide obtenu est de couleur grise.

Ce solide est analysé par diffraction des rayons X (Figure 1). Le diffractogramme montre la présence d'un mélange d'U₃O₈ et d'UO₄ hydraté, mélange contenant de l'ordre de 40% d'UO₄ hydraté.

Les observations au microscope électronique à balayage MEB et la mesure de la surface spécifique de la poudre montrent une modification de la morphologie des grains.

Ce traitement à O₃/H₂O₂ permet d'améliorer la réactivité de l'U₃O₈ de départ en augmentant la surface spécifique du solide (Figure 2).

### Exemple 3 :

Le solide obtenu dans l'exemple 2, peut ensuite réagir dans une seconde étape avec de l'eau oxygénée selon le procédé de conversion de l'invention mis en oeuvre conformément au document FR-A1-2 969 659 pour produire 99,9% d'un peroxyde d'uranium hydraté en 8 heures.

Du fait de la mise en oeuvre, conformément à l'invention, d'U₃O₈ activé, la conversion en UO₄ hydraté est donc quasi-totale.

## Revendications

1. Procédé d'activation de U₃O₈ en vue de la conversion de cet oxyde d'uranium en UO₄ hydraté par réaction avec du peroxyde d'hydrogène H₂O₂, dans lequel on réalise les étapes successives suivantes :
a) on prépare une suspension aqueuse contenant une poudre de U₃O₈ et du peroxyde d'hydrogène ;
b) on met en contact la suspension aqueuse contenant une poudre de U₃O₈ et du peroxyde d'hydrogène avec de l'ozone, moyennant quoi on obtient une suspension aqueuse d'une poudre de U₃O₈ activé ;
c) éventuellement, on sépare la poudre de U₃O₈ activé à partir de la suspension aqueuse.

2. Procédé selon la revendication 1, dans lequel lors de l'étape b) on introduit et on fait buller un courant gazeux contenant de l'ozone dans la suspension aqueuse contenant une poudre de U₃O₈ et du peroxyde d'hydrogène.

3. Procédé selon la revendication 2, dans lequel on fait buller l'ozone dans la suspension aqueuse pendant une durée de 1 à 10 heures, par exemple de 8 heures.

4. Procédé selon l'une quelconque des revendications 1 à 3, dans lequel lors de l'étape a), on ajoute de la poudre de U₃O₈ à un mélange d'eau et d'une solution aqueuse de peroxyde d'hydrogène H₂O₂.

5. Procédé selon l'une quelconque des revendications 2 à 4, dans lequel le courant gazeux contenant de l'ozone est un courant d'air contenant de l'ozone, ou un courant d'oxygène contenant de l'ozone, de préférence à une concentration en ozone de 1 à 500 g/m³, de préférence encore de 1 à 225 g/m³, mieux de 75 à 225 g/m³.

6. Procédé selon la revendication 4 ou 5, dans lequel la solution aqueuse de peroxyde d'hydrogène a une concentration de 30% à 70% en poids.

7. Procédé selon l'une quelconque des revendications précédentes, dans lequel la suspension aqueuse préparée dans l'étape a) a une concentration en uranium de 10 à 500 g/L, de préférence de 200 à 300 g/L, par exemple de 250 g/L.

8. Procédé selon l'une quelconque des revendications précédentes, dans lequel lors de l'étape b), le rapport molaire entre l'ozone et le U₃O₈ dans la suspension aqueuse est compris entre 1 et 5.

9. Procédé selon l'une quelconque des revendications précédentes, dans lequel lors de l'étape b), la quantité de peroxyde d'hydrogène dans la suspension aqueuse est au moins égale à la quantité d'ozone introduite dans la suspension aqueuse.

10. Procédé selon l'une quelconque des revendications précédentes, dans lequel ladite mise en contact est réalisée sous agitation.

11. Procédé selon l'une quelconque des revendications précédentes, dans lequel l'oxyde U₃O₈ se présente sous la forme d'un concentré uranifère appelé « Yellow Cake », ou l'oxyde U₃O₈ provient du séchage, puis de la calcination d'un concentré d'uranium à base par exemple d'UO₄ hydraté, de diuranate d'ammonium, ou de tricarbonate d'uranium, obtenu par précipitation dans un réacteur, notamment dans un réacteur à lit fluidisé, à partir d'une solution uranifère.

12. Procédé de conversion de U₃O₈ en UO₄ hydraté de formule UO₄, nH₂O où n est 2 ou 4, comprenant au moins une étape dans laquelle on ajoute du peroxyde d'hydrogène H₂O₂ à la suspension aqueuse d'une poudre de U₃O₈ activé obtenue à l'issue de l'étape b) du procédé d'activation de la revendication 1, ou à une suspension aqueuse préparée en mettant en suspension dans de l'eau la poudre de U₃O₈ activé obtenue à l'issue de l'étape c) du procédé d'activation de la revendication 1.

13. Procédé selon la revendication 12, qui comprend les étapes successives suivantes :
a1) addition de peroxyde d'hydrogène H₂O₂ à la suspension aqueuse d'une poudre de U₃O₈ activé obtenue à l'issue de l'étape b) du procédé d'activation de la revendication 1, ou à une suspension aqueuse préparée en mettant en suspension dans de l'eau la poudre de U₃O₈ activé obtenue à l'issue de l'étape c) du procédé d'activation de la revendication 1, conversion de l'U₃O₈ en UO₄ hydraté, et précipitation, cristallisation du UO₄ hydraté dans la suspension ;
b1) récupération du précipité, des cristaux d'UO₄ hydraté ;
c1) éventuellement, lavage du précipité, des cristaux de UO₄ hydraté récupéré(s) ;
d1) éventuellement, répétition de l'étape c1) ;
e1) éventuellement, séchage du précipité, des cristaux;
dans lequel l'addition du H₂O₂ à la suspension aqueuse est effectuée de façon à ce que la suspension contienne un excès stoechiométrique de H₂O₂ par rapport à la stoechiométrie de la réaction à partir d'U₃O₈ :
UO_{2,67} + 1,33 H₂O₂ + nH₂O → UO₄,nH₂O+ 1,33 H₂O (1)
et le pH de la suspension est maintenu dans les étapes a), et b) à une valeur comprise entre 1 et 3.

## Patentansprüche

1. Verfahren zur Aktivierung von U₃O₈ für die Umwandlung dieses Uranoxids in UO₄-Hydrat durch Reaktion mit Wasserstoffperoxid H₂O₂, wobei die folgenden aufeinanderfolgenden Schritte durchgeführt werden:
a) man stellt eine wässrige Suspension her, die ein U₃O₈-Pulver und Wasserstoffperoxid enthält;
b) man bringt die wässrige Suspension, die ein U₃O₈-Pulver und Wasserstoffperoxid enthält, in Kontakt mit Ozon, wodurch man eine wässrige Suspension eines aktivierten U₃O₈-Pulvers erhält;
c) optional trennt man das aktivierte U₃O₈-Pulver aus der wässrigen Suspension ab.

2. Verfahren nach Anspruch 1, wobei ein Gasstrom, der Ozon enthält, in Schritt b) in die wässrige Suspension, die ein U₃O₈-Pulver und Wasserstoffperoxid enthält, eingebracht und hindurchperlen gelassen wird.

3. Verfahren nach Anspruch 2, wobei Ozon während einer Zeitspanne von 1 bis 10 Stunden, beispielsweise 8 Stunden, durch die wässrige Suspension perlen gelassen wird.

4. Verfahren nach einem der Ansprüche 1 bis 3, wobei U₃O₈-Pulver in Schritt a) zu einem Gemisch aus Wasser und einer wässrigen Lösung von Wasserstoffperoxid H₂O₂ gegeben wird.

5. Verfahren nach einem der Ansprüche 2 bis 4, wobei es sich bei dem Gasstrom, der Ozon enthält, um einen Luftstrom, der Ozon enthält, oder einen Sauerstoffstrom handelt, der Ozon enthält, vorzugsweise mit einer Ozonkonzentration von 1 bis 500 g/m³, noch bevorzugter von 1 bis 225 g/m³ und besser noch von 75 bis 225 g/m³ handelt.

6. Verfahren nach Anspruch 4 oder 5, wobei die wässrige Wasserstoffperoxidlösung eine Konzentration von 30 bis 70 Gew.-% aufweist.

7. Verfahren nach einem der vorhergehenden Ansprüche, wobei die in Schritt a) hergestellte wässrige Suspension eine Urankonzentration von 10 bis 500 g/l, vorzugsweise 200 bis 300 g/l, beispielsweise 250 g/l aufweist.

8. Verfahren nach einem der vorhergehenden Ansprüche, wobei in Schritt b) das Molverhältnis von Ozon und U₃O₈ in der wässrigen Suspension zwischen 1 und 5 liegt.

9. Verfahren nach einem der vorhergehenden Ansprüche, wobei in Schritt b) die Wasserstoffperoxidmenge in der wässrigen Suspension zumindest gleich der in die wässrige Suspension eingebrachten Ozonmenge ist.

10. Verfahren nach einem der vorhergehenden Ansprüche, wobei das Inkontaktbringen unter Rühren erfolgt.

11. Verfahren nach einem der vorhergehenden Ansprüche, wobei das Oxid U₃O₈ in Form eines uranhaltigen Konzentrats vorliegt, das als «Yellow Cake» bezeichnet wird, oder sich das Oxid U₃O₈ aus dem Trocknen und anschließenden Calcinieren eines Urankonzentrats beispielsweise auf Basis von UO₄-Hydrat, Ammoniumdiuranat oder Uraniumtricarbonat ergibt, das durch Präzipitation in einem Reaktor, insbesondere einem Wirbelschichtreaktor, aus einer uranhaltigen Lösung erhalten wird.

12. Verfahren zur Umwandlung von U₃O₈ in UO₄-Hydrat der Formel UO₄, nH₂O, wobei n 2 oder 4 bedeutet, das zumindest einen Schritt umfasst, in dem Wasserstoffperoxid H₂O₂ zu der wässrigen Suspension eines aktivierten U₃O₈-Pulvers, die am Ende von Schritt b) des Aktivierungsverfahrens gemäß Anspruch 1 erhalten wird, oder zu einer wässrigen Suspension gegeben wird, die hergestellt wird, indem das am Ende von Schritt c) des Aktivierungsverfahrens gemäß Anspruch 1 erhaltene aktivierte U₃O₈-Pulver in Wasser suspendiert wird.

13. Verfahren nach Anspruch 12, das die folgenden aufeinanderfolgenden Schritte umfasst:
a1) Zugabe von Wasserstoffperoxid H₂O₂ zu der wässrigen Suspension eines aktivierten U₃O₈-Pulvers, die am Ende von Schritt b) des Aktivierungsverfahrens gemäß Anspruch 1 erhalten wird, oder zu einer wässrigen Suspension, die hergestellt wird, indem das am Ende von Schritt c) des Aktivierungsverfahrens gemäß Anspruch 1 erhaltene aktivierte U₃O₈-Pulver in Wasser suspendiert wird, Umwandlung von U₃O₈ in UO₄-Hydrat und Präzipitation, Kristallisation des UO₄-Hydrats in der Suspension;
b1) Gewinnung des Präzipitats, der Kristallen von UO₄-Hydrat;
c1) optional Waschen des Präzipitats, der Kristallen von UO₄-Hydrat, das (die) gewonnen wurde(n);
d1) optional Wiederholen des Schrittes c1);
e1) optional Trocknen des Präzipitats, der Kristalle;
wobei die Zugabe von H₂O₂ zu der wässrigen Suspension so erfolgt, dass die Suspension in Bezug auf die Stöchiometrie der Reaktion ausgehend von U₃O₈ einen stöchiometrischen Überschuss an H₂O₂ aufweist:
UO_{2,67} + 1,33 H₂O₂ + nH₂O→ UO₄,nH₂O+1,33 H₂O (1)
und der pH-Wert der Suspension in den Schritten a) und b) auf einem Wert zwischen 1 und 3 gehalten wird.

## Claims

1. A method to activate U₃O₈ for conversion of this uranium oxide to hydrated UO₄ via reaction with hydrogen peroxide H₂O₂, wherein the following successive steps are performed:
a) an aqueous suspension is prepared containing a powder of U₃O₈ and hydrogen peroxide;
b) the aqueous suspension containing a powder of U₃O₈ and hydrogen peroxide is contacted with ozone, whereby an aqueous suspension of a powder of activated U₃O₈ is obtained;
c) optionally, the powder of activated U₃O₈ is separated from the aqueous suspension.

2. The method according to claim 1 wherein during step b) a gas stream containing ozone is introduced and bubbled into the aqueous suspension containing a powder of U₃O₈ and hydrogen peroxide.

3. The method according to claim 2 wherein ozone is bubbled in the aqueous suspension for a time of 1 to 10 hours, for example 8 hours.

4. The method according to any one of claims 1 to 3 wherein during step a) a U₃O₈ powder is added to a mixture of water and of an aqueous solution of hydrogen peroxide H₂O₂.

5. The method according to any one of claims 2 to 4 wherein the gas stream containing ozone is a stream of air containing ozone, or a stream of oxygen containing ozone, preferably at an ozone concentration of 1 to 500 g/m³, more preferably 1 to 225 g/m³, further preferably 75 to 225 g/m³.

6. The method according to claim 4 or 5 wherein the concentration of the aqueous solution of hydrogen peroxide is 30 % to 70 % by weight.

7. The method according to any one of the preceding claims wherein the uranium concentration of the aqueous suspension prepared in step a) is 10 to 500 g/L, preferably 200 to 300 g/L, for example 250 g/L.

8. The method according to any one of the preceding claims wherein during step b) the molar ratio between ozone and U₃O₈ in the aqueous suspension is between 1 and 5.

9. The method according to any one of the preceding claims wherein during step b) the amount of hydrogen peroxide in the aqueous suspension is at least equal to the amount of ozone introduced into the aqueous suspension.

10. The method according to any one of the preceding claims wherein said contacting is conducted under agitation.

11. The method according to any one of the preceding claims wherein the U₃O₈ oxide is in the form of a uranium-containing concentrate called Yellow Cake, or the U₃O₈ oxide is derived from the drying and then calcining of an uranium concentrate, for example an hydrated UO₄ - based, ammonium diuranate - based or uranium tricarbonate - based uranium concentrate, obtained by precipitation in a reactor, in particular in a fluidised bed reactor, from a uranium-containing solution.

12. A method to convert U₃O₈ to hydrated UO₄ of formula UO₄, nH₂O where n is 2 or 4, comprising at least one step wherein hydrogen peroxide H₂O₂ is added to the aqueous suspension of a powder of activated U₃O₈ obtained at the end of step b) of the activation method of claim 1, orto an aqueous suspension prepared by placing in suspension in water the powder of activated U₃O₈ obtained at the end of step c) of the activation method of claim 1.

13. The method according to claim 12 which comprises the following successive steps:
a1) adding hydrogen peroxide H₂O₂ to the aqueous suspension of a powder of activated U₃O₈ obtained at the end of step b) of the activation method of claim 1, or to an aqueous suspension prepared by placing in suspension in water the powder of activated U₃O₈ obtained at the end of step c) of the activation method of claim 1, converting U₃O₈ to hydrated UO₄, and precipitating, crystallizing the hydrated UO₄ in the suspension;
b1) recovering the precipitate, crystals, of hydrated UO₄;
c1) optionally, washing the recovered precipitate, crystals of hydrated UO₄;
d1) optionally, repeating step c1);
e1) optionally, drying the precipitate, crystals;
wherein the addition of H₂O₂ to the aqueous suspension is conducted so that the suspension contains a stoichiometric excess of H₂O₂ relative to the stoichiometry of the reaction starting from U₃O₈:
UO_{2.67} + 1.33 H₂O₂ + nH₂O→ UO₄,nH₂O+ 1.33 H₂O (1)
and the pH of the suspension in steps a) and b) is maintained at a value between 1 and 3.
